# EUROPEAN PATENT APPLICATION

(11) **EP 1 672 851 A1**
(43) Date of publication of application: **21.06.2006**
(21) Application number: 05027190.7
(22) Date of filing: 13.12.2005
(51) Int. Cl.: H04L 12/56

(54) **Centralized control of multi protocol label switching (MPLS) network**

(30) Priority: 20.12.2004 KR 2004109024
(71) Applicant: Samsung Electronics Co., Ltd., Suwon-si, Gyeonggi-Do (KR)
(72) Inventor: Lee, Ki-Cheol, Bundang-gu Seongnam-si Gyeonggi-do (KR); Nam, Kee-Sung, Gangnam-gu Seoul (KR); Kang, Byung-Chang, Poongdeokchun-dong Yongin-si Gyeonggi-do (KR); Shin, Keun-Ho, Yeongtong-gu Suwon-si Gyeonggi-do (KR); Lee, Chur-Ung, Suwon-si Gyeonggi-do (KR); Kang, In-Kwon, Seocho-gu Seoul (KR)
(74) Representative: Lang, Johannes

(57) **Abstract**

A centralized control apparatus and a method thereof manages an Multi Protocol Label Switching (MPLS) network, in which the centralized control apparatus performs Label Switched Path (LSP) setting of the MPLS network and management for set LSP, to reduce a load of the MPLS network generated upon setting LSP and to reduce a time for setting the LSP, and to improve management efficiency for the set LSP.

## Description

### BACKGROUND OF THE INVENTION

### Field of the Invention

The present invention relates to management and control of a Multi Protocol Label Switching (MPLS) network, and more particularly, to an apparatus and a method of centralized control of a MPLS network capable of minimizing a message exchange between respective switches in the MPLS network.

### Description of the Related Art

Generally known in the art, in guarantee ways of quality of service, a network is classified into two kinds of networks, one of which is Quality of Service (QoS) guaranteed network guaranteeing a complete QoS according to service types provided and a characteristic of subscriber, the other of which is a best-effort network providing QoS in a proper level.

Generally, an IP network is characterized as providing the best-effort services. However, such an IP network has a limit to provide various multimedia services such as Voice over IP (VoIP), video phone, video conference, IP TV, Video on Demand (VoD) and so on that subscribers will demand in the future. The reason for limit is that one of the prerequisite conditions for providing the above-mentioned multimedia services is end-to-end guarantee of QoS, but the best-effort IP network cannot satisfy the guarantee of end-to-end QoS (the guarantee for service bandwidth, delay, jitter, loss and the like).

As a result, the methods for guarantee of end-to-end QoS in an IP network, for example, the technologies of DiffServ, IEEE 802.1p and the like, have been developing. Also, MPLS has been introduced for a QoS guaranteed network.. With the introduction of MPLS, technologies of IP router based IP/MPLS, Asynchronous Transfer Mode (ATM) switch based ATM/MPLS, and Ethernet switch based Ethernet/MPLS have been developed, and available products using the technologies are now being put on the market.

An MPLS network has a distributed type management structure on the management side. The MPLS network can correspond to an IP/MPLS network and/or an ATM/MPLS network. Hereinafter, both IP/MPLS and ATM/MPLS networks will be called MPLS networks without discrimination.

The edge of MPLS network is connected to an IP router or ATM switch (hereinafter called a router), and a core of the MPLS network is composed of label switching network elements such as an IP router based switch or an ATM switch based MPLS switch (hereinafter called an MPLS switch). Multimedia service data inputted via the IP router or ATM switch connected to the edge of the MPLS network is transferred via a Label Switched Path (LSP) set on the MPLS network, possibly providing the guarantee of a Quality of Service (QoS) for multimedia services.

In the MPLS network, the setting of an LSP for providing QoS guaranteed service is conducted through the inter-exchanging of IP routing protocol, ATM routing/signaling protocol, MPLS signaling protocol and so on between the respective MPLS switches. That is, the MPLS network is controlled in a distributed type control method such that the respective switches conduct an LSP setting, a management of the set LSP and the like.

The MPLS network is controlled in the distributed type control method so that a complicated protocol is required for the setting and management of LSP. For example, IP/MPLS network requires IP routing protocol such as Open Shortest Path First (OSPF), Intermediate System-Intermediate System (IS-IS), Border Gateway Protocol (BGP) and so on for an LSP computation, and an MPLS signaling protocol such as Label Distribution Protocol (LDP), Constraint Routing-LDP (CR-LDP), ReSource reserVation Protocol (RSVP-TE) and so on for the LSP setting. Also, an ATM/MPLS network requires an ATM routing/signaling protocol such as Private Network-Network Interface (PNNI) in addition to the MPLS signaling protocol and IP routing protocol.

These complicated protocols make an MPLS based network very complicated, with the result that a structure of an MPLS switch is very complicated. Also, the MPLS switch is loaded with an advance control function such as LSP setting and so on for traffic transfer, rather than with a traffic transfer function. Furthermore, in an ATM/MPLS, problems occur in that because there is no 2.5Gbps or more class high speed interface, it is difficult to obtain high speed operation, a rate of header is much larger than data, and it is high-priced. Still furthermore, since the above-mentioned distributed type control MPLS network operates and manages through collecting LSP information set by the respective MPLS switches, a problem arises in that it is difficult to operate and manage the network.

In order thus to solve these problems, it requires an apparatus and a method for management of an MPLS network, in which a structure of an MPLS switch and MPLS network is simplified, and a load of an MPLS switch generated by an advance control function is reduced.

### SUMMARY OF THE INVENTION

It is, therefore, an object of the present invention to provide an apparatus and a method for managing a Multi Protocol Label Switching (MPLS) network capable of simplifying a structure of both an MPLS switch and the MPLS network.

It is another object of the present invention to provide an apparatus and a method for managing an MPLS network capable of reducing a load generated by the MPLS switch in the MPLS network.

To achieve the above and other objects, a centralized control apparatus for an MPLS network including at least one label switching network element is provided, the apparatus comprising: a Label Switching Path (LSP) computation information collecting section adapted to receive LSP computation information including resource information and connection state information of the at least one label switching network element from the respective at least one label switching network element; and an LSP computation section adapted to compute an LSP of the MPLS network with the received LSP computation information.

According to another aspect of the present invention, a centralized control method for an MPLS network including at least one label switching network element is provided, the method comprising: receiving LSP computation information including resource information and connection state information of at least one label switching network element from the respective at least one label switching network element; generating topology information for the MPLS network using the received LSP computation information; computing an LSP of the MPLS network using the topology information and the resource information; and setting the LSP in the MPLS network by transmitting the calculated LSP to the respective at least one label switching network element.

### BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:
Fig. 1 is a block diagram of a Multi Protocol Label Switching (MPLS) network;
Fig. 2 is a block diagram of a centralized control type MPLS network controlled by a centralized control apparatus in accordance with an embodiment of the present invention;
Fig. 3 is a block diagram of a centralized control apparatus;
Fig. 4 is a block diagram of an MPLS network with calculated tunnel LSP and virtual connection LSP indicated;
Fig. 5 is a block diagram of monitoring performance values used for performance monitoring of Label Switched Path (LSP) using Operation, Administration and Maintenance (OAM) packets;
Fig. 6 is a block diagram of connectivity monitoring of LSP using OAM packets;
Fig. 7 is a block diagram of link monitoring of an MPLS network using a hello message; and
Fig. 8 is a flowchart of an operational procedure of a centralized control type MPLS network in accordance with an embodiment of the present invention.

### DETAILED DESCRIPTION OF THE INVENTION

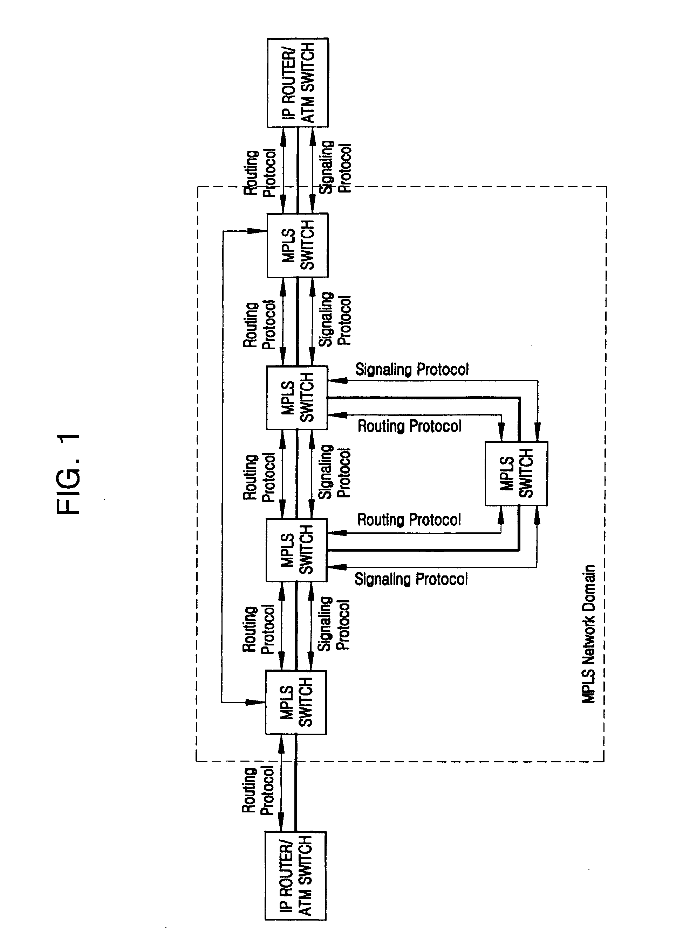

Fig. 1 is a block diagram of a Multi Protocol Label Switching (MPLS) network. The network, as shown in FIG. 1, has a distributed type management structure on the management side. The network of FIG. 1 can correspond to an IP/MPLS network and/or an ATM/MPLS network. Hereinafter, both IP/MPLS and ATM/MPLS networks will be called MPLS networks without discrimination.

As shown in FIG. 1, the edge of MPLS network is connected to an IP router or ATM switch (hereinafter called a router), and a core of the MPLS network is composed of label switching network elements such as an IP router based switch or an ATM switch based MPLS switch (hereinafter called an MPLS switch). Multimedia service data inputted via the IP router or ATM switch connected to the edge of the MPLS network is transferred via a Label Switched Path (LSP) set on the MPLS network, possibly providing the guarantee of a Quality of Service (QoS) for multimedia services.

Hereinafter, exemplary embodiments of the present invention are described in detail with reference to the attached drawings. In the description, if a detailed explanation of a related known function or configuration is determined to unnecessarily render the gist of the present invention ambiguous, then a detailed explanation thereof was omitted.

A centralized control type MPLS network hereinafter described according to the present invention uses only minimum protocol to collect topology information and resource information, i.e., topology/resource discovery, and an Operation, Administration and Maintenance (OAM). Through this, the present invention does not use routing and signaling protocols used in the MPLS network, but rather uses a centralized control apparatus in order to control the MPLS network, thus resolving a problem caused by a complicated protocol stack. The present invention removes the conventional protocol stack by using a centralized control method, so that a structure of an MPLS switch can be simplified. Also, the present invention performs all of the computation and setting of the LSP and topology/resources, resource information and fault management and so on in the MPLS network by using a centralized control apparatus, thereby simplifying the operation and management of the network.

Firstly, a centralized control type MPLS network employing the present invention is explained below.

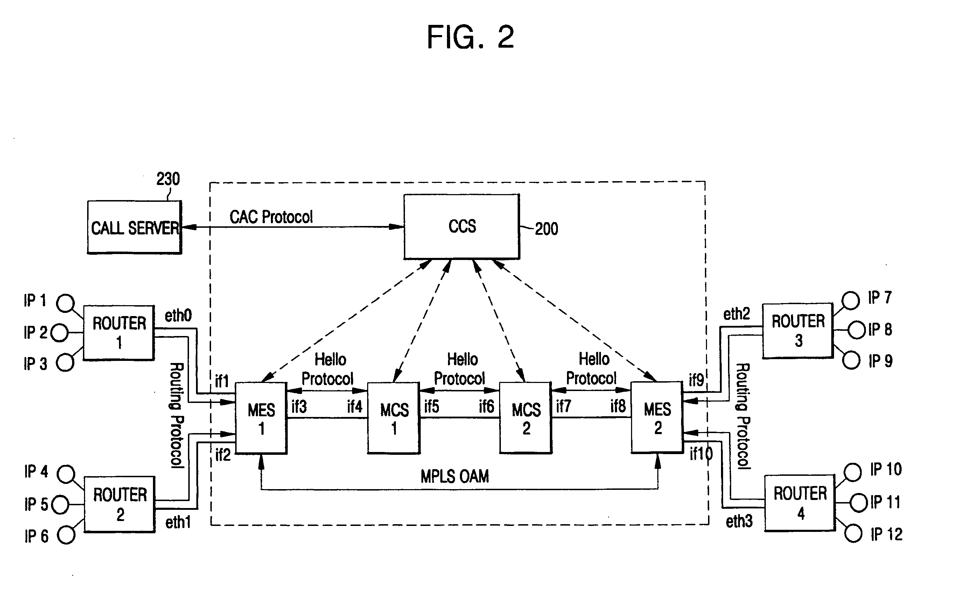

Fig. 2 is a block diagram of a centralized control type MPLS network controlled by a centralized control apparatus in accordance with an embodiment of the present invention.

As shown in Fig. 2, the centralized control type MPLS network according to the present invention includes a Centralized Control System (CCS) 200 for controlling and managing the MPLS network, an MPLS Edge Switch (MES) for mapping data such as IP packets inputted to the LSP or transferring MPLS packets transferred from a high-leveled MPLS Core Switch (MCS) to a lower-leveled interface instrument, and an MCS for switching MPLS packets. The MES is positioned at the edge of the MPLS network for mapping inputted data to the LSP. The MCS is positioned inside the MES for switching transferred MPLS packets. The MES and the MCS can be called an MPLS switch. Hereinafter, if not required to particularly classify them, an MES and an MCS are simply called MPLS switches.

The MPLS switches in the present invention discover topology information and resource information for computation of the LSP. In the present invention, the MPLS switches conduct only the discovery of topology information and resource information and do not conduct an LSP computation, so that a structure thereof can be simplified as compared with those of existing MPLS switches. The MPLS switches can discover topology information and resource information via a sending and receiving of hello message between the neighboring MPLS switches. The discovery of topology/resource information by the MPLS switches is explained later in detail. In the centralized control type MPLS network of the present invention, the LSP computation is conducted not by the respective MPLS switches but rather by the centralized control apparatus 200.

Hereinafter, the centralized control apparatus 200 is explained with reference to the attached drawings.

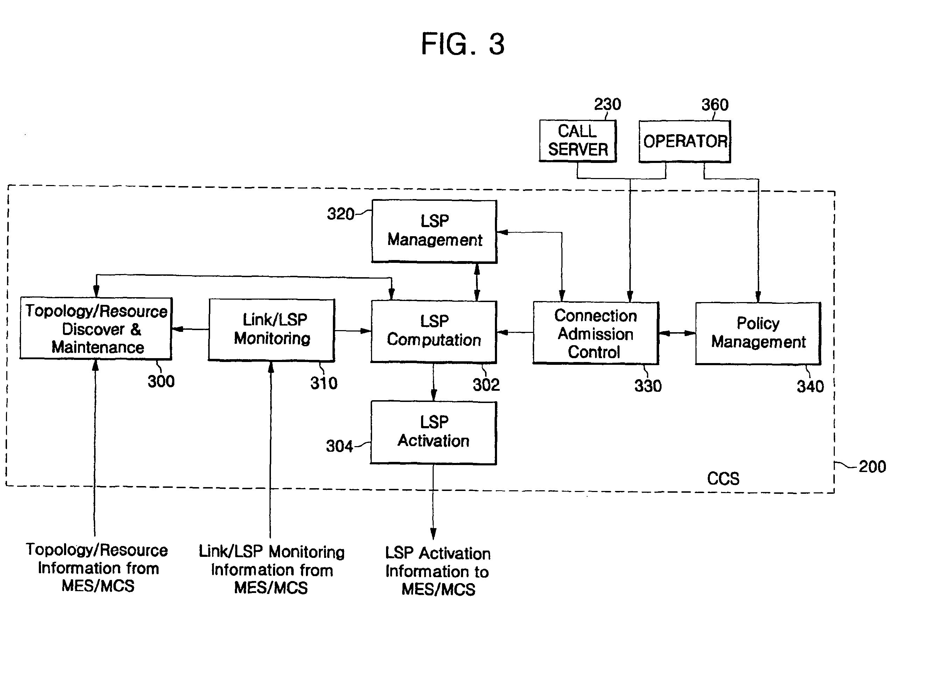

Fig. 3 is a block diagram of a centralized control apparatus.

As shown in Fig. 3, the centralized control apparatus 200 includes an LSP computation information collecting section (Topology/Resource Discovery & Maintenance) 300, an LSP computation section 302, an LSP activation section 304, an LSP monitoring section 310, an LSP management section 320, a connection admission control section 330, and a policy management section 340.

The topology/resource discovery section 300 discovers LSP computation information required for computing LSP to be set to the centralized control type MPLS network of the present invention. The LSP computation information includes topology information and resource information. In the description, instead of using a term, "LSP computation information", "topology information and resource information" that are the representative items of the LSP computation information will be used. The topology/resource discovery & maintenance section 300 receives topology information and resource information from the respective MPLS switches in order to discover the same. Herein, the topology information transmitted to the topology/resource discovery & maintenance section 300 by the MPLS switches is the connection state information between neighboring other MPLS switches. Comparing with this, the topology information generated by using the information that the topology/resource discovery & maintenance section 300 receives from the MPLS switches is for the whole structure of MPLS network. The MPLS switches can check the topology information and the resource information by sending and receiving hello message between the neighboring MPLS switches. Hereinafter, the discovery of topology information and the resource information using a hello message in the MPLS switch are explained in detail.

The MPLS switches can check an interconnection state by sending and receiving a hello message relative to each other. The hello message used for this can include an MES/MCS ID of the MPLS switch sending the hello message, a hello message interval, a hello dead interval and so on. Herein, the hello interval is a cycle that the MPLS switch sends the hello message, and the hello dead interval is a time that it has been determined that a link failure has occurred because the hello message has not arrived.

For example, if MES1 sends the hello message to the MCS1, the MES1 can constitute the hello message including (MES1 ID, 10ms and 100ms) information and send the same with if3. With the hello message, the MCS1 will be transferred with the meaning that the MES1 will send the hello message every 10ms, and it will be determined that if the hello message has not arrived within 100ms, a link failure has occurred. Also, the MCS1 receives the hello message transmitted by the MES1 through if4, so that it can perceive that the MES1 is connected to if4. Beside this, the hello message for checking topology/resource can be, of course, defined variously. Also, the respective MPLS switches can recognize an acceptable bandwidth of the interfaces connected therewith to check resource by links. That is, the respective MPLS switches can discover the information on what they are connected with certain MPLS switch through a link with some resources.

The respective MPLS switches collecting the topology information and the resource information send the gathered topology information and the resource information to the centralized control apparatus 200. An interface between the respective MPLS switches and the centralized control apparatus 200 can be diversely embodied as an Simple Network Mail Protocol (SNMP), a Transport Layer-1(TL-1), a Common Object Request Broker Architecture (CORBA), an eXtensile Markup Language (XML) and so on.

The centralized control apparatus 200 constructs a topology/resource table using the topology information and the resource information received from the MPLS switches. The construction of the topology/resource table can be performed by topology/resource discovery & maintenance section 300 in the centralized control apparatus 200.

A table 1 below shows one embodiment of the topology/resource table that the centralized control apparatus 200 constructs in the centralized control type MPLS network as shown in Fig. 2.

**Table 1**

| Node ID 1 | Interface ID 1 | Bandwidth ID | Node ID 2 | Interface ID 2 |
|---|---|---|---|---|
| MES1 | if1 | 1G | Router 1 | eth0 |
| | if2 | 1G | Router 2 | eth1 |
| | if3 | 10G | MCS 1 | If4 |
| MCS1 | if4 | 10G | MES 1 | if3 |
| | if5 | 10G | MCS 2 | If6 |
| MCS2 | if6 | 10G | MCS 1 | if5 |
| | if7 | 10G | MES 2 | if8 |
| MES2 | if8 | 1G | MCS 2 | If7 |
| | if9 | 1G | Router 3 | eth2 |
| | If10 | 1G | Router 4 | eth3 |

What is checked from table 1 is as follows.

The MPLS network expressed by table 1 includes the MPLS switches of MES1, MCS1, MCS2 and MES2.

The MES1 among those MPLS switches can be connected to a router 1, a router 2 and MCS1. The MES1 can send data to the router 1 using the if1 interface with a bandwidth of 1G, send data to the router 2 using the if2 interface with a bandwidth of 1G, or send data to the MCS1 using the if3 interface with a bandwidth of 10G. eth0, eth 1 and if4 of Interface ID 2 in table 1 are the respective interfaces used when the router 1, router 2 and MCS1 connected to the MES1 send data to the MES1. Since MCS1, MCS2 and MES2 of Node ID 1 in the topology/resource table of table 1 are also interpreted like in MES1, an explanation for their items of table 1 has been omitted.

A lower class leveled interface instrument such as an IP router and so on is connected to the MES among the MPLS switches. Although the IP router is constructed as an example in Fig. 2, an Ethernet switch, an ATM/FR (frame) relay switch, a media gateway, a Time-Division Multiplexing (TDM) switch and the like can be connected to the MES.

The lower class leveled IP routers connected to the MES send the connected host address or IP prefix information to the MES using the IP routing protocol. For example, the router 1 and router 2 connected to the MES1 send a host address or IP prefix information connected to the respective ones to the MES 1. That is, the router 1 sends the information of IP1, IP2 and IP3 to the MES1, and the router 2 sends the information of IP4, IP5 and IP6 to the MES 1. Also, MES2 receives the information from the router 3 and the router 4. Such information that the MES' receive from the routers is called "lower class interface information". The MES1 and MES2 send the lower class interface information that each receives to the centralized control apparatus 200.

The centralized control apparatus 200 constructs a lower class interface topology table based on the lower class interface information received from the MES. The lower class interface topology table is one that the centralized control apparatus 200 constructs and sends again to the respective MES'. The lower class interface topology table is used to map IP packets inputted from the lower class interface table that the MES is inputted, to the LSP. That is, the MES receiving IP packet analyzes a destination address in a received IP packet header, and determines what the LSP is mapped with the IP packet with reference to the lower class interface topology table.

Table 2 below shows one embodiment of the lower class interface topology table that the centralized control apparatus 200 constructs in the centralized control type MPLS network as shown in Fig. 2.

**Table 2**

| MES ID | Lower level IP router ID | IP subnet |
|---|---|---|
| MES 1 | Router 1 | IP1 |
| | | IP2 |
| | | IP3 |
| | Router 2 | IP4 |
| | | IP5 |
| | | IP6 |
| MES 2 | Router 3 | IP7 |
| | | IP8 |
| | | IP9 |
| | Router 4 | IP 10 |
| | | IP11 |
| | | IP12 |

The lower class topology table of table 2 is one possibly used in mapping for a connection between the MES' of the MPLS network edge and the lower class interfaces. Referring to table 2, it can be seen that the MES 1 is connected to the router 1 and the router 2, and the MES2 is connected to the router 3 and the router 4.

The centralized control apparatus 200 constructs the topology/resource table and then computes an LSP based on a policy that the topology/resource table and network operator defines. The LSP computation is conducted by the LSP computation section 302 in the centralized control apparatus 200. A service type, a service site/section, service parameters, protection/restoration, preemption and so on are what must be considered. Herein, the service type can include specific items including a 2-layer Virtual Private Network (VPN) such as, for example, P2P, VPWS, P2MP using VPWS, MPLS and so on, a 3-layer VPN, IP multimedia services such as, for example, VoIP, video conference, picture phone and IP video services, TEM or Ethernet line and so on. The service site/section can include specific items including P2P, P2MP, MP2MP and so on. The service parameters can include specific items including bandwidth, delay, jitter, packet loss and so on. The protection/restoration can include specific items including link or path protection, protection type (such as, for example, 1:1, 1+1, 1:N, N:M and so on) and the like. The preemption can include specific items including a preemption priority, a preemption type (such as, for example, preemptor enable, non preemtor, preemtable, nonpreemtable and so on) and the like.

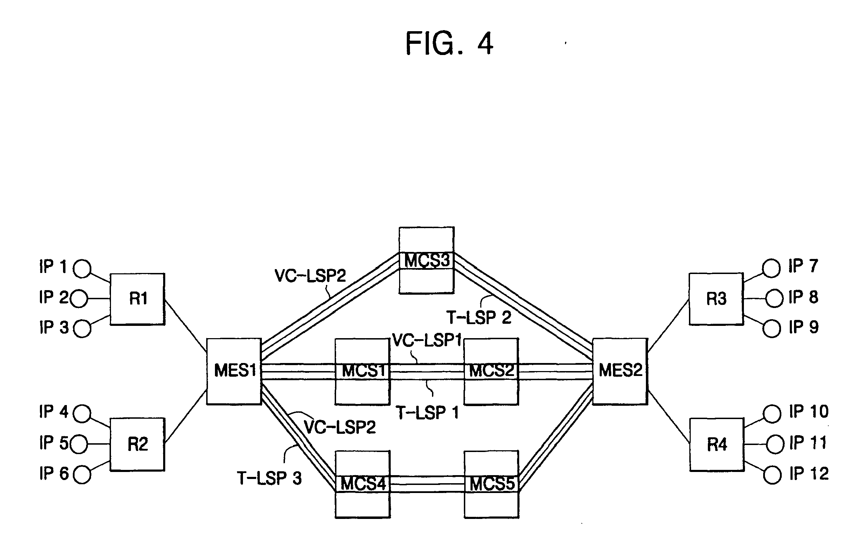

The LSP computation section 302 can use a Constraint Based Shortest Path First (CSPF) algorithm for the LSP computation. The LSP computation is explained below with reference to Fig. 4. Herein, a tunnel LSP and Virtual Connection (VC) LSP are particularly described.

Fig. 4 is a block diagram of an MPLS network with calculated tunnel LSP and virtual connection LSP indicated.

In Fig. 4, T-LSP 1 is the tunnel LSP having the resources including 300Mb/s of bandwidth, delay 1 of transfer delay time, jitter 1 of jitter and so on, T-LSP 2 is the tunnel LSP having the resources including 150Mb/s of bandwidth, delay 2 of transfer delay time, jitter 2 of jitter and so on, and T-LSP 3 is the tunnel LSP having the resources including 50Mb/s of bandwidth, delay 3 of transfer delay time, jitter 3 of jitter and so on. Also, VC-LSP 1 is the VC LSP having the resources including 30Mb/s of bandwidth, delay 11 of transfer delay time, jitter 12 of jitter and so on, VC-LSP 2 is the VC LSP having the resources including 15Mb/s of bandwidth, delay 21 of transfer delay time, jitter 22 of jitter and so on, and VC-LSP 3 is the VC LSP having the resources including 5Mb/s of bandwidth, delay 31 of transfer delay time, jitter 32 of jitter and so on. Classifying LSP' illustrated in Fig. 4 into their respective service classes is as in the following table 3. In table 3, the premium class is the LSP providing best QoS, guaranteed class is the LSP providing proper QoS not reaching that of the premium class, and the best-effort class is the LSP providing general QoS not guaranteeing the quality of service. Of course, besides such classifying method, these classes can be classified into other types of classes.

**Table 3**

| **For FEC 1(I/F address of IP router 3, R3) from IP router 1, R1** | | | | | | | |
|---|---|---|---|---|---|---|---|
| **Tunnel & VC LSP Class (induing preemption priority)** | | **Node** | **Incoming Tunnel Label** | **Incoming VC Label** | **Outgoing I/F** | **Outgoing Tunnel Label** | **Outgoing VC Label** |
| **Premium** | **S=0 H=1** | **MES 1** | **-** | **-** | **if0** | **L1** | **m1** |
| | | **MCS 1** | **L1** | **m1** | **if1** | **L2** | **m1** |
| | | **MCS 2** | **L2** | **m1** | **if2** | **L3** | **m1** |
| | | **MES 2** | **L3** | **m1** | **if3** | **-** | **-** |
| **Guaranteed** | **S=3 H=4** | **MES 1** | **-** | **-** | **if0'** | **L1'** | **m1'** |
| | | **MCS 3** | **L1'** | **m1'** | **if1'** | **L2'** | **m1'** |
| | | **MES 2** | **L2'** | **m1'** | **if2'** | **-** | **-** |
| **Best Effort** | **S=7 H=7** | **MES 1** | **-** | **-** | **if0"** | **L1"** | **m1"** |
| | | **MCS 4** | **L1"** | **m1"** | **if1"** | **L2"** | **m1"** |
| | | **MCS 5** | **L2"** | **m1"** | **if2"** | **L3"** | **m1"** |
| | | **MES 2** | **L3"** | **m1"** | **if3"** | **-** | **-** |

Data received in MES 1 from router 1 or router 2 is transferred to the MES2 via any one of LSP' illustrated in Fig. 4, and then transferred from the MES2 to the router 3 or router 4. A selection of LSP to be used for data transfer can be conducted by various methods, and the resource can be an important condition for LSP selection. For example, a traffic requiring 10Mb/s of bandwidth cannot be transferred through VC-LSP 3 having 5Mb/s of bandwidth. The details of the methods for LSP selection have been omitted. A policy stored in the policy management section 340 can be reflected for the LSP computation. The LSP computation section 302 calculates the LSP in order to satisfy the policy.

The LSP calculated by the LSP computation section 302 is set to the respective MPLS switches via an LSP activation section 304. The centralized control apparatus 200 completing the LSP computation for all connections transmits the calculated LSP information to the LSP activation section 304. The LSP activation section 304 conducts an LSP activation for transmitting the LSP information set to the respective MPLS switches. In the LSP activation, the information transmitted to the respective MPLS switches is Forward Equivalence Classes (FEC) information, lower class level interface topology information, class to EXP mapping information, Label Forwarding Information Base (LFIB) information and so on.

FEC information indicates a packet group transmitted by the same policy, the lower class level interface information indicates one of table 2, and the class to EXP mapping information indicates DiffServ DSCP (DiffServ Code Point) and MPLS EXP mapping information or IEEE 802.1p class and MPLS EXP mapping information and so on. Also, LFIB information is the MPLS label switching information that the respective MPLS switches should proceed and which can include an input label, an output label, an output interface and so on.

The FEC transmitted to the MPLS switch by the LSP activation section 304 is explained as follows. As an example of the FEC, there can be a packet group in which the packets are divided into the plural classes based on destination network address. The FEC information in this case can be indicated as in the following table 4.

**Table 4**

| FEC | FEC 1(R1) | FEC 2(R2) | FEC 3(R3) | FEC 4(R4) |
|---|---|---|---|---|
| IP Subnet | IP1 | IP4 | IP7 | IP 10 |
| | IP2 | IP5 | IP8 | IP11 |
| | IP3 | IP6 | IP9 | IP12 |

The class to EXP mapping information indicates a class and so on of QoS, which can be exemplified by the following tables 5 and 6. Table 5 is mapping table according to the IEEE 802.1p Class of Service (CoS), and table 6 is mapping table according to DSCP. Additional explanation for tables 5 and 6 have been omitted.

**Table 5**

| IEEE 802.1p CoS | EXP Value | Class |
|---|---|---|
| Cos 0 | EXP 0 | Premium |
| Cos 1 | EXP 1 | Guaranteed |
| Cos 2 | EXP 2 | Guaranteed |
| Cos 3 | EXP 3 | Guaranteed |
| Cos 4 | EXP 4 | Guaranteed |
| Cos 5 | EXP 5 | Guaranteed |
| Cos 6 | EXP 6 | Guaranteed |
| Cos 7 | EXP 7 | Best Effort |

**Table 6**

| DSCP | EXP Value | Class |
|---|---|---|
| EF | EXP 0 | Premium |
| AF 11 | EXP 1 | Guaranteed |
| AF12 | EXP 2 | Guaranteed |
| AF21 | EXP 3 | Guaranteed |
| AF22 | EXP 4 | Guaranteed |
| AF31 | EXP 5 | Guaranteed |
| AF32 | EXP 6 | Guaranteed |
| BE | EXP 7 | Best Effort |

The LFIB information is one for label forwarding, which can be exemplified by the following tables 7 to 9. Additional explanations for tables 7 to 9 have been omitted.

**Table 7**

| Input Router | FEC | LSP Class | Outgoing I/F | Outgoing VC Label | Outgoing Tunnel Label |
|---|---|---|---|---|---|
| R1 | R2 | - | eth2 | n 1 | - |
| | R3 | Premium | if0 | m1 | L1 |
| | | Guaranteed | if1 | m2 | L2 |
| | | Best Effort | if2 | m3 | L3 |
| | R4 | Premium | if0 | m1' | L1 |
| | | Guaranteed | if1 | m2' | L2 |
| | | Best Effort | if2 | m3' | L3 |
| R2 | R1 | - | eth 1 | n2 | - |
| | R3 | Premium | if0 | m4 | L1 |
| | | Guaranteed | if1 | m5 | L2 |
| | | Best Effort | if2 | m6 | L3 |
| | R4 | Premium | if0 | m4' | L1 |
| | | Guaranteed | if1 | m5' | L2 |
| | | Best Effort | if2 | m6' | L3 |

**Table 8**

| Incoming Tunnel Label | Outgoing I/F | Outgoing Tunnel Label |
|---|---|---|
| L1 | if0 | L1' |
| L2 | if1 | L2' |
| L3 | if2 | L3' |
| L4 | if3 | L4' |

**Table 9**

| Incoming Tunnel Label | Incoming VC Label | Outgoing I/F | Outgoing Router (FEC) |
|---|---|---|---|
| L1' | m 1 | if0 | R3 |
| L2' | m2 | if0 | |
| L3' | m3 | if0 | |
| L1' | m4 | if0 | |
| L2' | m5 | if0 | |
| L3' | m6 | if0 | |
| L1' | m1' | if1 | R4 |
| L2' | m2' | if1 | |
| L3' | m3' | if1 | |
| L1' | m4' | if1 | |
| L2' | m5' | if1 | |
| L3' | m5 | if1 | |

The MPLS network can conduct MPLS OAM function in order to detect LSP performance and failure information. With the MPLS OAM function, the MPLS network can detect a case where the LSP performance is severely degraded or an LSP failure is generated, and remove an unusable LSP to calculate a new LSP, or conduct a restoration function in which an unusable LSP is switched into a replaced LSP. The centralized control apparatus 200 can implement an MPLS OAM function as well. The LSP monitoring section 310 of the centralized control apparatus 200 manages links of the MPLS network and LSP performance and failure set. Hereinafter, the OAM function according to the present invention is explained in the following three items including LSP performance monitoring, LSP connectivity monitoring and link connectivity monitoring of the MPLS network.

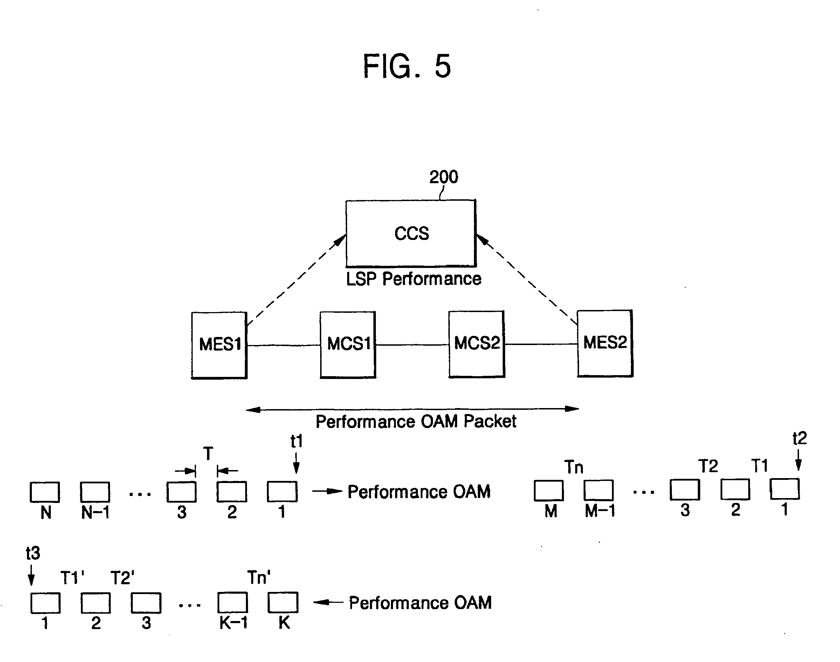

Firstly, the LSP performance monitoring is explained with reference to Fig. 5.

Fig. 5 is a block diagram of monitoring performance values used for performance monitoring of LSP using OAM packets.

For LSP performance monitoring in the MPLS network, an OAM packet is used. Through the transfer of an OAM packet, values of transfer delay, jitter, transfer loss and so on in the LSP can be measured. In Fig. 5, one-way transfer delay is a time for transfer of an OAM packet between MES1 and MES2, i.e., "t2-t1", one-way jitter is a dispersion value of T1 to Tn, i.e., "var{T1, T2,..., Tn}", and one-way transfer loss is a ratio of the quantity of received packets at the receiver side to that of transmitted packets at the transmitter side, i.e., "M/N". Round-trip transfer delay is a time until a response packet is received in response to a transmit packet, i.e., "t3-t1" of Fig. 5. The round-trip jitter is "var{T1', T2',...,Tn'}", and the round-trip transfer loss is "K/N". The respective MES' of the MPLS network measure values for the LSP performance including the above items to transmit the same to the LSP monitoring section 310 of the centralized control apparatus 200, and the LSP monitoring section 310 monitors the respective LSP performances through the received measured values.

Next, LSP connectivity monitoring is explained.

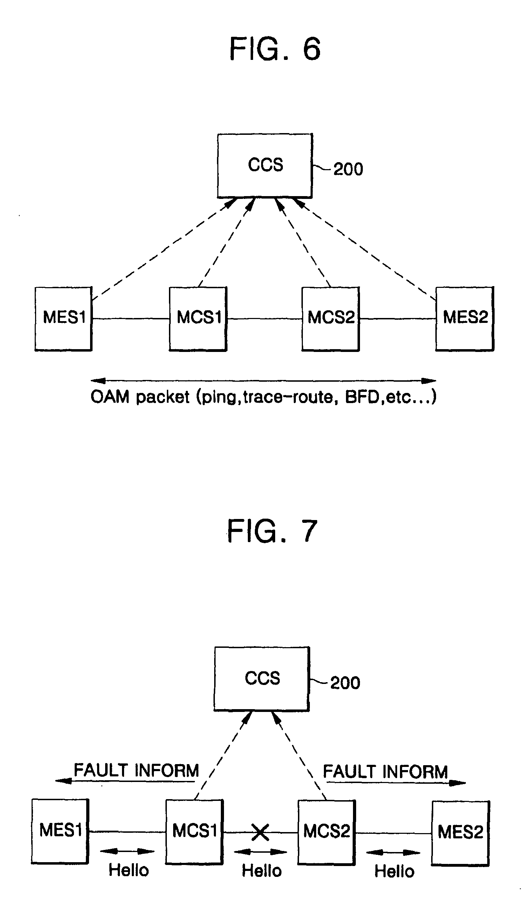

Fig. 6 is a block diagram of connectivity monitoring of an LSP using OAM packets.

As the OAM packet used for the LSP connectivity monitoring, there are Internet Engineering Task Force(IETF) MPLS ping (including ping mode and trace-route) packet, IETF Bi-directional Forwarding Detection (BFD) message, IETF Virtual Circuit Connection Verification (VCCV) message, ITU-T OAM packet and so on. The ITU-T OAM packet is defined in "ITU-T Y.1711". Additional explanation for these packets have been omitted. If the LSP failure is detected through these packets, the LSP monitoring section 310 can resolve the failure by implementing a traffic engineering, protection/restoration and so on for the corresponding LSP.

MPLS network link monitoring is explained below. The MPLS network link monitoring can be conducted using a hello message.

For MPLS network link and LSP management, the respective MPLS switches continuously conduct topology/resource checking through the hello message even after checking of the topology/resource at an initial running of the network. If a change of a topology/resource occurs, the MPLS switch informs the centralized control apparatus 200 of the change so that the centralized control apparatus 200 can update the topology/resource table.

As an example of link monitoring using a hello message, the MPLS switch determines that if the hello message has not been received within a hello dead interval, a failure is generated at the corresponding link, and the failure signal is transmitted to the centralized control apparatus 200. This failure signal is transmitted to the LSP monitoring section 310 of the centralized control apparatus 200. The failure signal can include at least information on a failure link.

The LSP monitoring section 310 receiving the failure signal transmitting the information on the failure link to the topology/resource discovery section 300, and the topology/resource discovery section 300 updates the topology/resource table using the received information. Also, the LSP monitoring section 310 informs the LSP computation section 302 of the link failure to allow the LSP computation section 302 to conduct the protection/restoration function to the LSP in the failure link. As examples of a protection/restoration conducted for facing the occurrence of a failure, a Unidirectional Path Switched Ring (UPSR) for Synchronous Digital Hierarchy (SDH) protection, a path protection for Bi-directional Line Switched Ring (BLSR) and MPLS protection, and a link protection and so on can be used. These link monitorings in the MPLS network are illustrated in Fig. 7.

Fig. 7 is a block diagram of a link monitoring of MPLS network using a hello message.

If a failure occurs at a link between MCS1 and MCS2, a hello message is not transmitted between MCS 1 and MCS2. If the hello message has not been received from the counter switch, MCS 1 or MCS2 transmits a failure signal indicating a failure occurrence in the link connected to the counter switch to the LSP monitoring section 310 of the centralized control apparatus 200. If the failure signal is received, the LSP monitoring section 310 can conduct the protection/restoration for the corresponding link using link information included in the failure signal.

The centralized control apparatus 200 can further include the LSP management section 320 for managing a state of set LSP'. The LSP management section 320 stores the information on the computed and set LSP and thereafter manages the operation of the MPLS network. The LSP information stored in the LSP management section 320 is also used in the OAM of the MPLS network described above. The following table 10 is an example of a table to be used when the LSP management section 320 manages a state of LSP' set to the MPLS network.

**Table 10**

| Link | Link BW | | # of Tunnel LSP | Tunnel LSP ID | BW of Tunnel LSP | | # of VC LSP | VC LSP ID | BW of VC LSP | |
|---|---|---|---|---|---|---|---|---|---|---|
| | Reserved | Unreserved | | | Reserved | Unreserved | | | Reserved | Unreserved |
| MES1 to MCS1 | B1 | b1 | 2 | Tunnel 1 | T1 | t1 | 3 | VC1 | M1 | m1 |
| | | | | | | | | VC2 | M2 | m2 |
| | | | | | | | | VC3 | M3 | m3 |
| | | | | Tunnel 2 | T2 | t2 | 2 | VC4 | M4 | m4 |
| MCS1 to MCS2 | B2 | b2 | 2 | Tunnel 1 | T1 | t1 | 3 | VC5 | M5 | m1 |
| | | | | | | | | VC2 | M2 | m2 |
| | | | | | | | | VC3 | M3 | m3 |
| | | | | Tunnel 3 | T3 | t3 | 2 | VC6 | M6 | m6 |
| | | | | | | | | VC7 | M7 | m7 |

Also, the centralized control apparatus 200 of the present invention can further include the connection admission control section 330 for admitting or denying an external connection call. The connection admission control section 330 is connected to an external operator 360 or an external call server 230. Although the external service is connected to the MPLS network through the MES, whether the service is admitted is determined by the connection admission control section 330 of the centralized control apparatus 200.

If an external service connection call is received from an operator 360 or call server (for example, soft switch) 230 and so on, the connection admission control section 330 determines whether the LSP and bandwidth usable for the calling service exist with reference to the LSP management section 320. If an available LSP and bandwidth exist in the set LSP, the connection admission control section 330 controls service data inputted to the MES to be mapped to the corresponding LSP. However, if the available LSP or bandwidth does not exist, the connection admission control section 330 requests the setting of a new LSP to the LSP computation section 302, and the LSP computation section 302 then computes a new LSP capable of receiving the corresponding service accordingly. If the requested service supportable LSP does not exist and the setting of a new LSP is also impossible, the LSP computation section 302 informs the requester of the corresponding service that the service cannot be provided.

Also, the centralized control apparatus 200 of the present invention can further include the policy management section 340 for conducting LSP setting and management policy. The policy management section 340 receives the LSP setting and management policy in the MPLS network from the operator 360, and renders the policy reflected in operating of the LSP computation section 302 or the connection admission control section 330.

The following are examples of the policy items stored and managed in the policy management section 340. Herein, the respective policy items are exemplarily classified into tunnel LSP associated policy items and virtual route LSP associated policy items.

Firstly, as the tunnel LSP associated policy items, there can be tunnel LSP class (for example, premium, guaranteed and best effort), tunnel LSP parameters (for example, bandwidth, delay and jitter), EXP <-> LSP mapping (for example, mapping EXP0 to premium class, mapping EXP1 to guaranteed class, and mapping EXP2 to EXP7 to best effort class), and protection/restoration and so on. Herein, as the protection/restoration, there can be, for example, link or path protection, protection type (for example, 1:1, 1+1, 1:N, N:N and so on), protection/restoration by the respective LSP classes and so on.

Next, as the virtual route LSP associated policy items, there can be virtual route LSP class (for example, premium, guaranteed, best effort and so on), virtual route LSP parameters (for example, bandwidth, delay, jitter, packet loss and so on), CoS (class of service) <-> EXP <-> LSP mapping, preemption priority per VC LSP, protection/restoration and so on. Herein, as an example of CoS <-> EXP <-> LSP mapping, there can be, for example, mapping of EF<->EXP0<-> premium, mapping of 802.1p 0<->EXP0<->premium and so on. For CoS, DSCP, 802.1p and so on can be used. Preemption priority per VC LSP can be used upon the setting of a new LSP or traffic engineering. The preemption/restoration is mapped to the tunnel LSP having a characteristic of required failure recovery.

Such policies can be used for LSP setting and management and the like in the MPLS network.

Hereinafter, the operation of the centralized control apparatus of the MPLS network according to the present invention is explained.

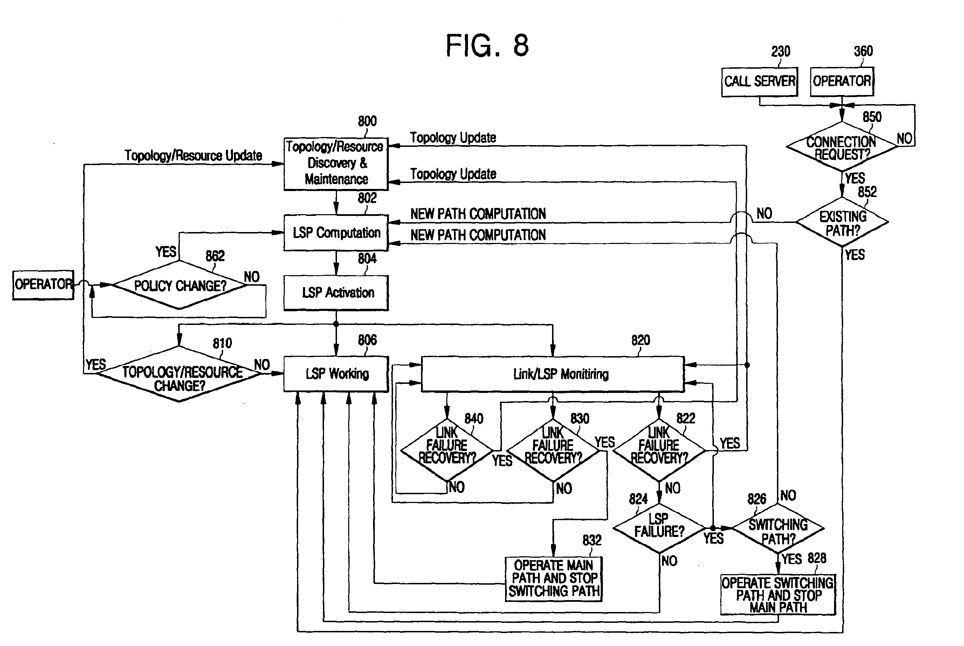

Fig. 8 is a flowchart of an operational procedure of a centralized control type MPLS network in accordance with an embodiment of the present invention.

The operation of the centralized control type MPLS network according to the present invention is explained as follows with reference to Figs. 2 to 8.

Firstly, a path setting procedure for the MPLS network is explained. The path setting procedure for MPLS network is illustrated in steps 800 to 804 of Fig. 8.

When the MPLS network starts an operation, the centralized control apparatus 200 collects the topology/resource information through information receipt from the MPLS switches and constructs the topology/resource table using the collected topology/resource information in step 800. In step 802, the centralized control apparatus 200 computes the LSP with reference to the topology/resource table. In step 804, the centralized control apparatus 200 transmits the computed LSP to the respective MPLS switches so as to set the computed LSP to the MPLS switches.

In step 806, the MPLS network is operated using the LSP set through the steps 800 to 804, and if a change of the topology/resource occurs as in step 810 in the operated MPLS network, then step 800 is performed again.

Next, upon the occurrence of a failure in the operated MPLS network that the LSP is set, a procedure for detecting the failure and recovering the failure is explained. This procedure is illustrated in steps 820 to 840 of Fig. 8.

In step 820, the centralized control apparatus 200 performs the detection for the operated MPLS network. If the failure signal is received from the MPLS switch, the centralized control apparatus 200 determines that a failure has occurred in the MPLS network. The MPLS switch can check whether a link failure has occurred using the hello message and monitor the LSP performance and failure using the MPLS OAM protocol. In the present invention, the MPLS OAM protocol can be used for checking whether a failure LSP exists on the MPLS network.

The centralized control apparatus 200 determines whether the link failure has occurred in step 822, and if so, it performs step 800 again. The centralized control apparatus 200 determines whether the LSP failure has occurred in step 824, and if so, it determines whether a preset switching path capable of replacing the failure LSP exists in step 826. If the switching path exists, the centralized control apparatus 200 operates the switching path instead of the failure LSP in step 828. If the switching path does not exist, the centralized control apparatus 200 computes an LSP used for a switching path in step 802. If an LSP failure has not occurred, the centralized control apparatus 200 maintains a state of the existing LSP operation.

If a link failure or LSP failure has occurred, the centralized control apparatus 200 continuously checks whether the failure link or failure LSP has recovered (step 830 or 840).

The centralized control apparatus 200 checks whether the LSP failure has recovered (step 830), and if it determines that the LSP failure has recovered, stops an operation of a now operated switching LSP and operates the main LSP (step 832). However, if the LSP maintains its failure state, the apparatus performs the LSP monitoring again.

The centralized control apparatus 200 checks whether the link failure has recovered (step 840), and if it determines that the link failure has recovered, it updates the topology/resource table (step 800). However, if the link failure is maintained, link monitoring is performed again.

The operation of the MPLS network when an external service request is received is explained as follows, as illustrated in steps 850 to 852 of Fig. 8.

If the centralized control apparatus 200 receives the service connection request from the operator 360 or call server 230 through the connection admission control section 330 (step 850), it checks whether an LSP capable of supporting the requested service exists (step 852). If an LSP capable of supporting the requested service exists, the centralized control apparatus 200 informs a counter apparatus requesting the service of the checked LSP, and if does not exist, it computes a new LSP for supporting the service (step 802). The computation for the new LSP can be performed by the LSP computation section 302 of the centralized control apparatus 200. The centralized control apparatus 200 informs the counter apparatus requesting the service of the newly computed LSP information.

Finally, a reflection procedure for policy of LSP setting and MPLS network management is explained as follows. This procedure corresponds to step 862 of Fig. 8.

The centralized control apparatus 200 receives the policy for LSP setting and management in the MPLS network from the operator 360, and if a change occurs in the existing policy (step 862), it manages the policy for MPLS network such that the MPLS network is operated by that policy.

As described before, the centralized control apparatus and method in the MPLS network have been explained.

However, the present invention described above can be adapted to other network in addition to the MPLS network. The present invention can be adapted to all networks that set a path through an information exchange between the respective switches constituting the network, so that the amount of information to be exchanged between the switches can be reduced. The network employing the present invention can provide a more excellent effect when it is adapted to a network in which a great amount of information exchange is conducted between the switches in order for setting of path.

Adapting the present invention makes it possible to solve a problem of the complicated protocol stack generated in the conventional MPLS network, and removing of the complicated protocol stack allows the construction of the MPLS switch and the structure of the MPLS network to be simplified. Also, the centralized control apparatus conducts all of topology/resource, LSP computation and setting, resource information and failure management and so on of the network, so that an operation and a management of the network can be simply conducted. The centralized control system of the present invention having such effects can be effectively adapted to a QoS guaranteed next Generation Network (NGN) under construction.

While the invention has been described in conjunction with various embodiments, they are illustrative only. Accordingly, many alternatives, modifications and variations will be apparent to persons skilled in the art in light of the foregoing detailed description. The foregoing description is intended to embrace all such alternatives and variations falling with the spirit and broad scope of the appended claims.

## Claims

1. A centralized control apparatus for an Multi Protocol Label Switching (MPLS) network including at least one label switching network element, the apparatus comprising:
a Label Switching Path (LSP) computation information collecting section adapted to receive LSP computation information including resource information and connection state information of the at least one label switching network element from the respective at least one label switching network element; and
an LSP computation section adapted to compute an LSP of the MPLS network with the received LSP computation information.

2. The apparatus according to claim 1, wherein the connection state information of the at least one label switching network element received by the LSP computation information collecting section from the at least one label switching network element comprises information checked by transmitting and receiving a hello message between adjacent label switching network elements.

3. The apparatus according to claim 2, wherein the hello message comprises an ID, a hello interval, and a hello dead interval of the at least one label switching network element transmitting the hello message.

4. The apparatus according to claim 1, wherein the LSP computation information collecting section is adapted to construct a topology/resource table indicating a connection relationship and the resource information between respective label switching network elements with the LSP computation information between label switching network elements received from the label switching network elements.

5. The apparatus according to claim 1, wherein the LSP computation information collecting section is adapted to construct a lower level interface topology table indicating connection information with a lower level interface with the LSP computation information between label switching network elements received from an MPLS Edge Switch (MES) comprising a label switching network element positioned at an edge of the MPLS network.

6. The apparatus according to claim 5, wherein the lower level interface is at least one of an Internet Protocol (IP) router, an Ethernet switch, an Asynchronous Transfer Mode/Frame Relay (ATM/FR) switch, a media gateway, and a Time-Division Multiplexing (TDM) switch.

7. The apparatus according to claim 1, further comprising an LSP activation section adapted to receive the computed LSP from the LSP computation section, and to transmit the received LSP to the respective at least one label switching network element to set the computed LSP to the respective MPLS switches.

8. The apparatus according to claim 1, further comprising an LSP management section adapted to receive the computed LSP from the LSP computation section and to store the computed LSP.

9. The apparatus according to claim 1, further comprising a connection admission control section adapted to check whether an LSP usable for the service exists from the LSP management section in response to a received external service request, and to transmit the LSP information to a counter apparatus requesting the service upon an LSP usable for the service existing.

10. The apparatus according to claim 9, wherein, upon an absence of an LSP usable for the service, the connection admission control section is adapted to request the LSP computation section to compute a new LSP for the requested service, to receive the information on the new LSP from the LSP computation section and to transmit the information to the counter apparatus requesting the service.

11. The apparatus according to claim 10, wherein, upon the absence of an LSP usable for the service and upon the new LSP not being set, the connection admission control section is adapted to inform the counter apparatus requesting the service that the service has not been provided.

12. The apparatus according to claim 1, further comprising a policy management section adapted to store policies to be adapted upon an LSP setting of the LSP computation section.

13. The apparatus according to claim 12, wherein the policy management section is adapted to output policy received from an operator to the LSP computation section.

14. The apparatus according to claim 12, wherein the LSP computation section is adapted to compute an LSP to satisfy the policy stored in the policy management section.

15. The apparatus according to claim 1, further comprising an LSP monitoring section adapted to monitor whether a failure in a link or an LSP in the service providing the MPLS network has occurred with a set LSP.

16. The apparatus according to claim 15, wherein the LSP monitoring section is adapted to detect a failure occurring in the MPLS network by receiving a failure signal from the label switching network element.

17. The apparatus according to claim 15, wherein, in the absence of a hello message being received in a hello dead interval involved in the hello message from a counter label switching network element, the label switching network element is adapted to determine that a failure has occurred in a connection link or LSP with the label switching network element, and to transmit an alarm signal to the LSP monitoring section in response thereto.

18. A Multi Protocol Label Switching (MPLS) network having a centralized control structure, the MPLS network comprising:
at least one label switching network element adapted to label switch; and
a centralized control apparatus adapted to perform an Label Switching Path (LSP) computation with connection state information and resource information of the at least one label switching network element received from the respective at least one label switching network element.

19. The MPLS network according to claim 18, wherein the at least one label switching network element is adapted to check an interconnection state between neighboring label switching network elements by transmitting a hello message between neighboring label switching network elements.

20. The MPLS network according to claim 19, wherein the hello message comprises an ID of a MPLS Edge Switch (MES)/MPLS Core Switch (MCS) transmitting the hello message, a hello interval, and a hello dead interval.

21. The MPLS network according to claim 18, wherein the centralized control apparatus is adapted to construct a topology/resource table indicating a connection relationship and resource information between respective MPLS switches with the LSP computation information received from the at least one label switching network element, and to compute the LSP of the MPLS network with the topology/resource table.

22. The MPLS network according to claim 18, wherein the centralized control apparatus is adapted to perform failure management to the set LSP.

23. The MPLS network according to claim 18, wherein the at least one label switching network element comprises a MPLS switch.

24. A network including at least one element, the network comprising:
an information collecting section adapted to receive connection state information between neighboring elements from the respective elements and to construct topology information of the entire network with the connection information between respective elements;
a path computation section adapted to compute a path to provide a communication service on the network with the topology information; and
a path setting section adapted to transmit the computed path to the elements to set the path.

25. A centralized control method of a Multi Protocol Label Switching (MPLS) network including at least one label switching network element, the method comprising:
receiving Label Switching Path (LSP) computation information including resource information and connection state information of each label switching network element from the respective label switching network elements;
generating topology information for the MPLS network with the received LSP computation information;
computing an LSP of the MPLS network with the topology information and the resource information; and
setting the LSP in the MPLS network by transmitting the computed LSP to the respective label switching network elements.

26. The method according to claim 25, wherein in receiving LSP computation information, the connection state information between the label switching network elements received from the label switching network elements comprises receiving information collected by transmitting and receiving a hello message between adjacent label switching network elements.

27. The method according to claim 25, wherein the LSP computation computes an LSP satisfying a policy determined by an operator.
